# DEMANDE DE BREVET EUROPEEN

(11) **EP 1 109 298 A1**
(43) Date de publication de la demande: **20.06.2001**
(21) Numéro de dépôt: 00440328.3
(22) Date de dépôt: 13.12.2000
(51) Int. Cl.: H02K 9/19, H02K 9/197

(54) **Dispositif de refroidissement pour machine électrique, et un moteur-roue utilisant ledit dispositif**

(30) Priorité: 15.12.1999 FR 9915798
(71) Demandeur: Technicrea Recherche Société à responsabilité limitée, 90000 Belfort (FR)
(72) Inventeur: Bey, Pierre, 90350 Evette Salbert (FR)
(74) Mandataire: Rhein, Alain

(57) **Abrégé**

L'invention concerne un dispositif de refroidissement pour machine électrique, et moteur-roue utilisant un tel dispositif de refroidissement.

Le dispositif de refroidissement comporte des moyens (3, 4, 30) permettant d'isoler de manière étanche le circuit magnétique (2) et les enroulements du stator (1) de la machine électrique, pour permettre une circulation d'un fluide caloporteur isolant diélectrique au coeur dudit circuit magnétique (2) et des développantes (22) desdits enroulements.

Le moteur-roue (5) comporte un stator (1) autour duquel tourne un rotor (6) lié à la jante (51) d'une roue.

## Description

La présente invention a pour objet un dispositif de refroidissement pour machine électrique, et un moteur-roue utilisant ledit dispositif de refroidissement.

On connaît des machines électriques, telles que des moteurs ou des alternateurs, qui incorporent un dispositif de refroidissement. Ces dispositifs trouvent leur utilité dans les moteurs électriques qui produisent beaucoup de chaleur, tels que par exemple ceux des moteur-roues qui consistent en des roues équipées chacune intérieurement à la jante d'un moteur, et pour lesquels l'augmentation du couple est obtenue par augmentation de l'intensité électrique, laquelle se traduit par une augmentation de la chaleur dégagée.

Ces dispositifs de refroidissement pour moteurs électriques consistent généralement en un circuit de fluide caloporteur qui parcourt le stator et/ou qui traverse l'axe du rotor, de tels dispositifs de refroidissement sont décrits dans les documents US 4.799.564, JP 1020.1196, FR 2.767.425 et FR 2.699.018.

Le document US 4.799.564 propose ainsi un moteur-roue comprenant dans une jante un moteur électrique, un réducteur et un système de freinage à disques, ainsi qu'un dispositif de refroidissement. Ce dispositif de refroidissement comporte une pompe à huile qui prélève de l'huile au niveau du réducteur et en envoie une partie vers les disques de freins et une partie vers le moteur, où elle traverse le rotor et éventuellement le stator.

Le document JP 1020.1196 propose un moteur électrique où un circuit d'eau circule dans des canaux pratiqués dans les tôles magnétiques du stator, les canaux consistant en des alignements de trous pratiqués dans chacune desdites tôles magnétiques.

Le document FR 2.767.425 propose un moteur-roue comportant un rotor, un stator et un démultiplicateur, ce dernier étant disposé à l'intérieur dudit stator, lui-même disposé à l'intérieur dudit rotor qui est construit en creux, tandis qu'un dispositif de refroidissement permet d'abaisser la température dudit stator. Ce dispositif de refroidissement comporte des conduites d'eau permettant de refroidir l'empilement de tôles magnétiques du stator.

Le document FR 2.699.018, au nom de la présente demanderesse, comporte un stator dans lequel sont pratiqués des conduits pour la circulation d'un liquide caloporteur.

Tous ces dispositifs de refroidissement sont cependant d'une efficacité limitée, puisqu'ils n'agissent, pour les plus performants, qu'au niveau interne du circuit magnétique du stator et plus particulièrement au coeur des tôles de ce dernier, alors que l'émission de chaleur se produit essentiellement lors des phases de fort couple, au niveau des enroulements du bobinage.

On connaît également par le document US 5.682.074 un moteur électrique pour véhicule électrique apte à dispenser la puissance nécessaire à l'entraînement de plusieurs roues. Ce moteur est réalisé en métal léger et résistant à la corrosion, et il comporte un système d'alimentation en huile de refroidissement du rotor et du coeur du stator, ainsi que des enroulements, en sorte d'autoriser des vitesses de rotation élevées à de grands moteurs pour véhicules. Dans ce but, le rotor et le stator sont enfermés dans un carter étanche dans lequel circule une huile de refroidissement.

Cependant, outre l'inconvénient lié au fait que le rotor tourne dans le carter d'huile et que par conséquent il est soumis à un effort résistant, il convient d'émettre des doutes en ce qui concerne le fonctionnement de ce moteur, puisqu'il n'est pas prévu d'isoler de manière étanche le stator par rapport au rotor, en sorte que rien n'empêche l'huile de refroidissement de pénétrer dans l'entrefer.

La présente invention a pour but remédier à ces divers inconvénients en proposant un dispositif de refroidissement pour moteur électrique permettant d'améliorer le refroidissement en captant la chaleur au plus près de tous les points d'émission.

Le dispositif de refroidissement pour machine électrique selon l'invention se caractérise essentiellement en ce qu'il comporte des moyens permettant d'isoler de manière étanche le circuit magnétique et les enroulements du stator de ladite électrique, pour permettre une circulation d'un fluide caloporteur isolant diélectrique au coeur dudit circuit magnétique et des développantes desdits enroulements.

Selon une caractéristique additionnelle du dispositif selon l'invention, la circulation de fluide caloporteur est réalisée par l'intermédiaire de moyens permettant la diffusion dudit fluide caloporteur dans les développantes des enroulements d'un même côté du circuit magnétique, puis dans les développantes des enroulements de l'autre côté.

Selon une autre caractéristique additionnelle du dispositif selon l'invention, les développantes des enroulements sont logées dans deux coiffes annulaires solidaires du stator, disposées chacune d'un côté de celui-ci, et reliées entre elles par une frette qui assure l'étanchéité.

Selon un mode de réalisation préférentiel du dispositif selon l'invention, le circuit magnétique est monté sur un support réalisé, tout comme les deux coiffes et la frette, dans un matériau composite.

Selon une autre caractéristique additionnelle du dispositif selon l'invention, la machine est un moteur polyphasé inversé du type synchrone à aimants permanents.

La présente invention a également pour objet un moteur-roue équipé d'un dispositif de refroidissement pour moteur électrique selon l'invention, et qui se caractérise essentiellement en ce qu'il comporte un stator autour duquel tourne un rotor lié à la jante d'une roue.

Selon une caractéristique additionnelle du moteur-roue selon l'invention, le rotor est lié à la jante par l'intermédiaire d'un réducteur.

Selon une autre caractéristique additionnelle du moteur-roue selon l'invention, le réducteur est un engrenage planétaire.

Selon une autre caractéristique additionnelle du moteur-roue selon l'invention, il comporte un système de freinage mécanique lié directement au rotor ou à la jante.

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé :
La figure 1 représente une vue schématique partielle en coupe selon un plan radial du stator d'un moteur électrique équipé d'un dispositif de refroidissement selon l'invention.
La figure 2 représente une vue schématique partielle en coupe selon un autre plan radial du même stator.
La figure 3 représente une vue schématique partielle et en coupe selon l'axe XX' de la figure 2.
La figure 4 représente une vue schématique partielle en coupe diamétrale d'un premier mode de réalisation d'un moteur-roue équipé d'un dispositif de refroidissement selon l'invention.
La figure 5 représente une vue schématique partielle en coupe diamétrale d'un second mode de réalisation d'un moteur-roue équipé d'un dispositif de refroidissement selon l'invention.

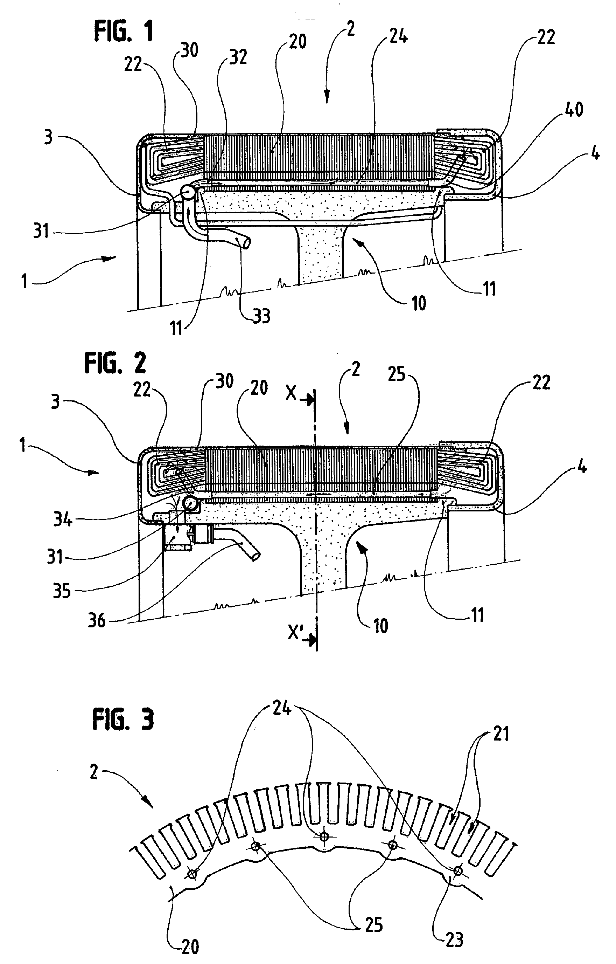

En référence aux figures 1, 2 et 3, on peut voir en partie le stator 1 d'un moteur polyphasé inversé, où le rotor, non représenté, tourne autour du stator 1. On notera toutefois que le dispositif de refroidissement selon l'invention peut également équiper des moteurs plus classiques où le rotor tourne à l'intérieur du stator.

Le stator 1 comporte un circuit magnétique 2 qui consiste en un tore monobloc constitué de tôles 20 isolées préencollées, tenues entre elles par polymérisation à chaud de la colle. Les tôles 20 comportent, de manière connue et comme cela est visible uniquement sur la figure 3, des encoches 21 destinées à permettre le bobinage des enroulements dont on voit les développantes 22 sur les figures 1 et 2.

Le circuit magnétique 2 est monté et calé sur un support ou tambour 10, lui-même solidarisé à un bâti, non représenté. Deux coiffes annulaires 3 et 4 sont solidarisées au support ou tambour 10, une de chaque côté du tore de tôles 20. Les coiffes annulaires 3 et 4, de section sensiblement en U, sont fixées au tambour 10 de manière à permettre de loger dans chacune d'elles les développantes 22 des enroulements, tandis qu'une frette 30 de faible épaisseur est placée sur le tore de tôles 20 pour prendre place dans l'entrefer, et sur les bords de laquelle sont solidarisées les coiffes annulaires 3 et 4, en sorte de réaliser un compartiment étanche.

Dans un mode de réalisation préférentiel du dispositif selon l'invention, le support ou tambour 10, les coiffes annulaires 3 et 4 ainsi que la frette 30, sont réalisées dans un matériau composite, tandis que les solidarisations sont réalisées par collage.

Le matériau composite utilisé est du type comprenant des faisceaux de fibres préimprégnés qui, avant cuisson, sont arrangés tridimensionnellement dans le moule ou en une préforme avant introduction dans le moule.

L'utilisation de cette technologie permet une réduction de poids de l'ensemble tout en garantissant un bon comportement et une grande précision de fabrication.

Par ailleurs, après sa mise en place, la frette 30 est rectifiée par usinage afin de réduire son encombrement dans l'entrefer.

On notera que le tore de tôles 20 est calé sur le support ou tambour 10 en rotation et en translation par l'intermédiaire, respectivement, de bossages 23, visibles sur la figure 3, que comporte le tore de tôles 20, et de deux talons latéraux 11 entre lesquels prend place le tore de tôles 20.

Comme on peut le voir sur la figure 3, le tore de tôles 20 est percé au niveau de la culasse, sous les encoches 21 et parallèlement à son axe, de canaux alternativement 24 et 25 débouchant dans les coiffes annulaires 3 et 4. Par ailleurs, en référence à la figure 1, on peut voir qu'un conduit annulaire de répartition 31 est placé dans la coiffe 3, autour du support ou tambour 10 extérieurement au tore de tôles 20 et à proximité de celui-ci. Le conduit annulaire 31 est connecté d'une part aux canaux 24 par l'intermédiaire de piquages 32, dont un seul est visible sur la figure, et d'autre part à un tuyau d'alimentation 33 relié à un circuit, non représenté, de circulation d'un fluide caloporteur isolant diélectrique et qui comprend notamment une pompe et un échangeur thermique.

A l'autre extrémité des canaux 24, chacun de ceux-ci est prolongé d'un tube 40 qui débouche au coeur des développantes 22 contenues dans la coiffe 4.

En référence maintenant à la figure 2, on peut voir qu'une extrémité des canaux 25 s'ouvre dans l'espace intérieur de la coiffe 4 où débouchent les tubes 40, tandis que leur autre extrémité est prolongée d'un petit tube 34 qui plonge au coeur des développantes 22 contenues dans la coiffe 3. De plus, un collecteur 35 connecté à un tuyau d'évacuation 36 qui traverse le support ou tambour 10, est disposé du côté du conduit annulaire de répartition 31 et est relié au circuit de circulation du fluide caloporteur.

Le fonctionnement du dispositif de refroidissement pour moteur électrique selon l'invention est le suivant, le conduit annulaire de répartition 31 est alimenté en fluide caloporteur qui traverse le tore de tôles 20 par les canaux 24 puis se répand par les tubes 40 dans la coiffe 4 en étant injecté au coeur des développantes 22, puis il retraverse le tore de tôles 20 par les canaux 25 et se répand par les tubes 34 dans la coiffe 3 au coeur des développantes 22 pour enfin être repris par le collecteur et être évacué vers l'échangeur thermique avant de revenir.

On notera que les coiffes 3 et 4 sont équipées en leur point haut d'un système de purge, non représenté, permettant de résorber toute poche d'air.

La circulation du fluide caloporteur assure un refroidissement optimum du stator 1, en circulant au plus près des points d'émission de chaleur. Le trajet suivi par le fluide caloporteur, à savoir en aller et retour, permet d'homogénéiser le refroidissement.

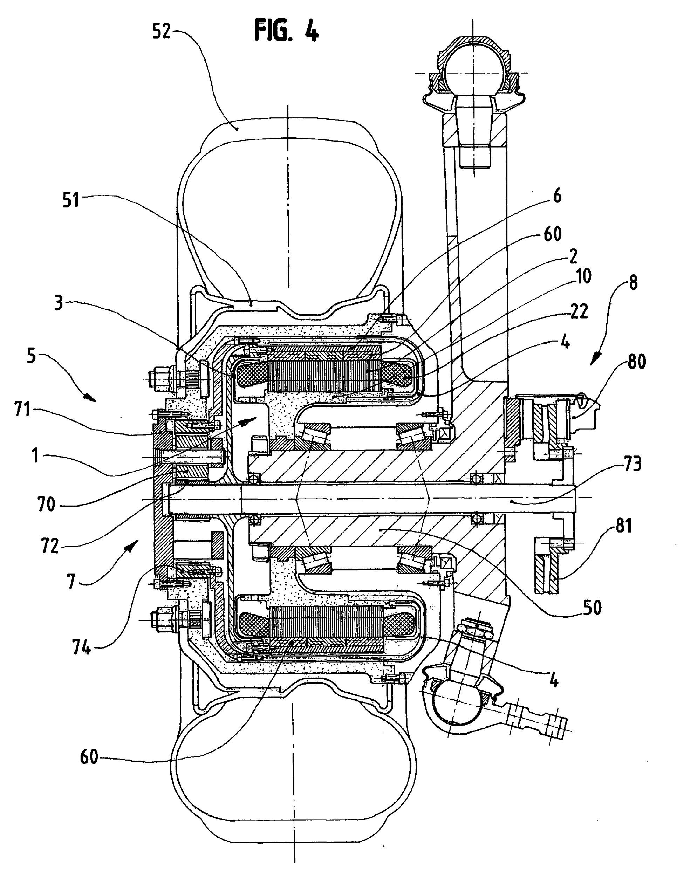

En référence maintenant à la figure 4, on peut voir un moteur-roue 5 comportant un moteur polyphasé inversé du type synchrone à aimants permanents, et équipé d'un dispositif de refroidissement selon l'invention.

Dans ce moteur-roue 5 on retrouve le stator 1 dont le tambour 10 est monté fixement sur une fusée 50 sur laquelle sont montés en rotation d'une part un rotor-cloche 6 muni d'aimants 60, et d'autre part une jante 51 portant un pneu 52, le rotor-cloche 6 et la jante 51 étant liés en rotation par l'intermédiaire d'un réducteur 7.

Le réducteur 7 consiste en un engrenage planétaire, il comporte des satellites 70, dont un seul est visible, portés par un plateau 71 solidaire fixement de la jante 51, et engrenés d'une part sur le pignon d'entrée 72 d'un arbre 73 monté en rotation dans la fusée 50 qu'il traverse axialement et lié en rotation au rotor-cloche 6, et d'autre part sur une couronne de sortie 74 solidaire coaxialement de la fusée 50. Le mouvement de rotation de l'arbre 73, sous l'effet de la rotation du rotor-cloche 6 et par l'intermédiaire du pignon d'entrée 72, est transmis aux satellites 70 qui roulent sur la couronne de sortie 74 et par là même entraînent le plateau 71, et donc la jante 51, en rotation.

Par ailleurs, le moteur-roue 5 est équipé d'un système de freinage 8 du type frein à disques à commande hydraulique. Il comporte un étrier 80 engagé sur un disque 81 calé sur l'arbre 73.

De manière avantageuse, le freinage mécanique du moteur-roue 5 est réalisé avant le réducteur 7, c'est-à-dire pour des fonctionnements à faible couple et grande vitesse, comparativement aux grandeurs mécaniques liées à la jante.

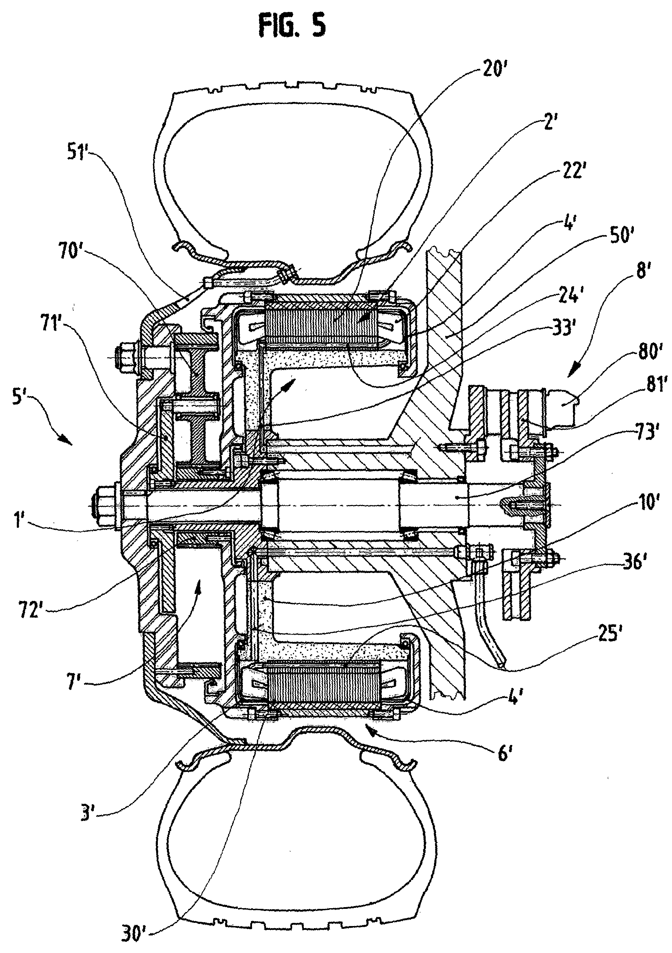

En référence maintenant à la figure 5, on peut voir, selon un second mode de réalisation, un moteur-roue 5' comportant un dispositif de refroidissement selon l'invention.

Tout comme le moteur-roue 5, le moteur-roue 5' comporte un rotor 6' tournant autour et sur un stator 1' qui comprend, sur un tambour 10', un circuit magnétique 2', constitué d'un empilage de tôles 20', et des enroulements, dont ne sont visibles que les développantes 22', ainsi que deux coiffes 3' et 4' reliées par une frette 30' passant dans l'entrefer. La circulation du fluide caloporteur isolant diélectrique est également réalisée en aller et retour dans des canaux 24' et 25' connectés à un circuit percé dans le tambour 10' et comprenant notamment un canal d'alimentation 33' et un canal d'évacuation 36'.

Bien entendu, le tambour 10', les coiffes 3' et 4' ainsi que la frette 30' sont de préférence réalisés en matériau composite du type comprenant des faisceaux de fibres préimprégnés qui, avant cuisson, sont arrangés tridimensionnellement dans le moule ou en une préforme avant introduction dans le moule.

Le moteur-roue 5' comporte une jante 51' solidarisée en rotation au rotor 6' par l'intermédiaire d'un réducteur 7' du type engrenage planétaire.

Par ailleurs, le moteur-roue 5' est monté sur une fusée 50' à laquelle est solidarisé le stator 1', et sur laquelle est monté en rotation le rotor 6', qui comporte un pignon d'entrée 72' sur lequel sont en prise des satellites 70', dont un seul est visible, portés par un plateau 71' solidaire fixement de la fusée 50' , et engrené sur une couronne de sortie 74' solidaire de la jante 51' et d'un arbre 73' qui traverse axialement la fusée 50' et dans laquelle il est en libre rotation.

Le moteur-roue 5' est également équipé d'un système de freinage mécanique 8' du type frein à disques à commande hydraulique, qui comporte un étrier 80' engagé sur un disque 81' calé sur l'arbre 73'.

Des moteur-roues tels que ceux décrits précédemment, autorisent de grandes performances puisque le refroidissement permet d'absorber l'accroissement de chaleur dégagée lors d'une augmentation de l'intensité électrique en vue d'une augmentation du couple et/ou de la puissance.

## Revendications

1. Dispositif de refroidissement pour machine électrique, caractérisé en ce qu'il comporte des moyens (3, 4, 30 ; 3', 4', 30') permettant d'isoler de manière étanche le circuit magnétique (2 ; 2') et les enroulements du stator (1 ; 1') de ladite machine électrique, pour permettre une circulation d'un fluide caloporteur isolant diélectrique au coeur dudit circuit magnétique (2 ; 2') et des développantes (22 ; 22') desdits enroulements.

2. Dispositif selon la revendication 1, caractérisé en ce que la circulation de fluide caloporteur est réalisée par l'intermédiaire de moyens (24, 25, 31, 32 ; 24', 25') permettant la diffusion dudit fluide caloporteur dans les développantes (22 ; 22') des enroulements d'un même côté du circuit magnétique, puis dans les développantes (22 ; 22') des enroulements de l'autre côté.

3. Dispositif selon la revendication 1 ou la revendication 2, caractérisé en ce que les développantes (22 ; 22') des enroulements sont logées dans deux coiffes annulaires (3, 4 ; 3', 4') solidaires du stator (1, 1'), disposées chacune d'un côté de celui-ci, et reliées par une frette (30 ; 30') qui assure l'étanchéité.

4. Dispositif selon la revendication 1, caractérisé en ce que le circuit magnétique (2 ; 2') est monté sur un support (10 ; 10') réalisé, tout comme les deux coiffes (3, 4 ; 3', 4') et la frette (30 ; 30'), dans un matériau composite.

5. Dispositif selon la revendication 4, caractérisé en ce que les coiffes (3, 4 ; 3', 4') sont collées sur les bords de la frette (30 ; 30'), laquelle est reprise par usinage.

6. Dispositif selon l'une quelconque des revendications précédentes, caractérisé en ce que la machine est un moteur polyphasé inversé du type synchrone à aimants permanents.

7. Dispositif selon l'une quelconque des revendications 4 à 6, caractérisé en ce que le matériau composite consiste en des faisceaux de fibres préimprégnés qui, avant cuisson, sont arrangés tridimensionnellement dans le moule ou en une préforme avant introduction dans le moule.

8. Dispositif selon l'une quelconque des revendications précédentes, caractérisé en ce que le circuit magnétique (2 ; 2') consiste en un tore monobloc constitué de tôles (20 ; 20') isolées préencollées, tenues entre elles par polymérisation à chaud de la colle.

9. Moteur-roue équipé d'un dispositif de refroidissement selon l'une quelconque des revendications précédentes, caractérisé en ce qu'il comporte un stator (1 ; 1') autour duquel tourne un rotor (6 ; 6') lié à la jante (51 ; 51') d'une roue.

10. Moteur-roue selon la revendication 9, caractérisé en ce que le rotor (6 ; 6') est lié à la jante (51 ; 51') par l'intermédiaire d'un réducteur (7 ; 7').

11. Moteur-roue selon la revendication 10, caractérisé en ce le réducteur (7 ; 7') est un engrenage planétaire.

12. Moteur-roue selon la revendication 10 ou la revendication 11, caractérisé en ce que le réducteur 7 des satellites (70) portés par un plateau (71) solidaire fixement de la jante (51), et engrenés d'une part sur un pignon d'entrée (72) d'un arbre (73) monté en rotation dans une fusée (50) qu'il traverse axialement, et lié en rotation au rotor (6), et d'autre part sur une couronne de sortie (74) solidaire coaxialement de ladite fusée (50).

13. Moteur-roue selon l'une quelconque des revendications 9 à 12, caractérisé en ce qu'il comporte un système de freinage mécanique (8) lié directement au rotor (6).

14. Moteur-roue selon la revendication 10 ou la revendication 11, caractérisé en ce qu'il est monté sur une fusée (50') à laquelle est solidarisé le stator (1'), et sur laquelle est monté en rotation le rotor (6') qui comporte un pignon d'entrée (72') sur lequel sont en prise des satellites (70') portés par un plateau (71') solidaire fixement de ladite fusée (50'), et engrené sur une couronne de sortie (74') solidaire de la jante (51') et d'un arbre (73') qui traverse axialement ladite fusée (50') et dans laquelle il est en libre rotation.
